# EUROPEAN PATENT SPECIFICATION

(11) **EP 2 578 660 B1**
(45) Date of publication and mention of the grant of the patent: **05.06.2019**
(21) Application number: 10851960.4
(22) Date of filing: 27.05.2010
(51) Int. Cl.: C09K 11/00, C09K 11/77, B82Y 30/00

(54) **OXYHALIDE LUMINESCENT MATERIAL DOPED WITH RARE EARTH CONTAINING METAL PARTICLE AND PRODUCTION METHOD THEREOF**
SELTENERDDOTIERTER OXYHALID-LEUCHTSTOFF MIT METALLPARTIKELN UND VERFAHREN ZU SEINER HERSTELLUNG
MATÉRIAU LUMINESCENT DE TYPE OXYHALOGÉNURE DOPÉ PAR DES TERRES RARES CONTENANT DES PARTICULES MÉTALLIQUES ET SON PROCÉDÉ DE PRODUCTION

(43) Date of publication of application: 10.04.2013
(73) Proprietor: Ocean's King Lighting Science&Technology Co., Ltd., Shenzhen, Guangdong 518054 (CN)
(72) Inventor: ZHOU, Mingjie, Shenzhen, Guangdong 518054 (CN); LIU, Jun, Shenzhen, Guangdong 518054 (CN); MA, Wenbo, Shenzhen, Guangdong 518054 (CN)
(74) Representative: Mewburn Ellis LLP
(86) International application number: PCT/CN2010/073290
(87) International publication number: WO 2011/147088

(56) References cited:
- CN-A- 1 334 309
- CN-A- 101 074 374
- US-A1- 2001 008 363
- US-A1- 2009 302 195
- US-B2- 6 946 785
- US-B2- 7 670 578
- KADIR ASLAN ET AL: "Fluorescent Core-Shell Ag@SiO 2 Nanocomposites for Metal-Enhanced Fluorescence and Single Nanoparticle Sensing Platforms", JOURNAL OF THE AMERICAN CHEMICAL SOCIETY, vol. 129, no. 6, 1 February 2007 (2007-02-01), pages 1524-1525, XP055069426, ISSN: 0002-7863, DOI: 10.1021/ja0680820

## Description

### FIELD OF THE INVENTION

The present invention relates to a production method of a luminescent material. More particular, the present invention relates to a production method of a rare earth doped oxyhalide luminescent material containing metal particles.

### BACKGROUND OF THE INVENTION

In recent years, field emission devices have attracted much attention due to the advantages, such as low operating voltage, low power consumption, no deflection coil, no X-ray radiation, radiation resistance and magnetic interference resistance, etc. By exciting the luminescent material using field emission cathode ray, field emission light source of high luminance and good color rendering properties can be obtained, which can be applied to professional lighting, display, instructions, general lighting and other fields. Thus, it is meaningful for researches on field emission devices of excellent performances to prepare luminescent materials of great performances.

At present, commercial luminescent materials are mainly from such luminescent material of traditional cathode-ray tube and projection television kinescope as sulfide series, oxide series and oxysulfide series. For example, ZnS:Ag,Cl, SrGa₂S₄:Ce, SrGa₂S₄:Eu, Y₂O₂S:Eu, Y₂SiO₅:Ce, ZnGa₂O₄:Mn, Y₂SiO₅:Tb, Y₃Al₅O₁₂:Tb and Y₂O₃:Eu, etc. Herein, sulfides have high luminance but less stability; oxides have good stability but worse luminance and conductivity than sulfides. Consequently, lots of researchers focus on investigating luminescent materials having good stability and high luminance. Efforts have been directed toward modifying such luminescent materials or developing new luminescent materials having great performances used in field emission devices. CN10174374 A describes a production method of rare-earth nano-fluorescent material by wet chemical method. US 2009/0302195 A describes a nanophosphor composite. US 2001/0008363 A describes phosphor particles. Asian et al J. Am. Chem. Soc. 2007, 129, 1524-1525 describes fluorescent core-shell Ag@SiO₂ nanocomposites.

### SUMMARY OF THE INVENTION

The technical problems of the present invention to be solved is to provide a production method for a rare earth doped oxyhalide luminescent material having good stability, high internal quantum efficiency and high luminous intensity.

The technical solution to solve the technical problem of the present invention is to provide a production method of rare earth doped oxyhalide luminescent material containing metal particles, including the following steps:
step 1: producing metal nanoparticles colloid;
step 2: surface treating the metal nanoparticles by adding metal nanoparticles colloid to the polyvinylpyrrolidone solution;
step 3: weighing rare earth oxide or rare earth oxalate and dissolving in dense nitric acid, heating and making superfluous nitric acid vaporized to form rare earth halide salt;
step 4: adding mixed solution of water and ethanol in volume ratio of 1:3 to 8 and metal nanoparticles obtained in step 2 into step 3, stirring, adding citric acid monohydrate to make the mole ratio of citric acid to metal ion be 1 to 5:1, adding polyethylene glycol and superfluous ammonium halide successively, heating in water bath and stirring to form precursor colloid;
step 5: obtaining dry colloid by drying the precursor obtained in step 4, grinding dry colloid in powder, pre-calcinating on constant temperature, cooling, calcinating in reduction atmosphere after grinding, cooling to obtain rare earth doped oxyhalide luminescent material containing metal particles.

In the production method of the present invention, in said step 1, the method of producing metal nanoparticles colloid comprises: dissolving and diluting appropriate solution of metal salt in ethanol or water; under the conditions of magnetic stirring, successively adding assist agent and reducing agent which act the role as stabilizer and dispersant respectively, after the reaction, metal nanoparticles colloid is obtained; said assist agent is polyvinylpyrrolidone, sodium citrate, cetyl trimethyl ammonium bromide, sodium dodecyl sulfate or sodium dodecyl sulfonate, said reducing agent is hydrazine hydrate, ascorbic acid, sodium citrate or sodium borohydride.

In the production method of the present invention, in said step 4, the concentration of said polyethylene glycol is in the range of 0.01 to 0.20g/ml, the heating in water bath is carried out in the temperature range of 75°C to 90°C, the time of stirring is in the range of 2 to 8h; adding ammonium halide in excess of 5% to 50% by mole ratio into obtained precursor colloid.

When the halogen in oxyhalide luminescent material is chlorine, in said step 3, rare earth oxide or rare earth oxalate is dissolved in dense hydrochloric acid instead of dense nitric acid, heating and making superfluous dense hydrochloric acid vaporized to form rare earth chloride; accordingly, in step 4, it is not necessary to add excessive ammonium chloride into obtained precursor colloid.

In said step 5, said drying is carried out in blast drying oven and in the temperature range of 80°C to 120°C for 4 to 24h; pre-calcinating is carried out in the temperature range of 500°C to 800°C for 2 to 6h; calcinating is carried out in the temperature range of 800°C to 1000°C for 2 to 6h; said reduction atmosphere is selected from mixed gases of nitrogen and hydrogen, pure hydrogen, and carbonic oxide.

Compared with the prior art, by virtue of introduction of metal particles into the oxyhalide luminescent material doped with rare earth and the surface plasma resonance effect of the metal surface, the present invention improves the luminescence intensity of the oxyhalide luminescent material. The luminescent material of the present invention has good stability, uniform appearance, excellent luminescent performances, and, both the purity and luminance of the emitting light after excitation are high, so can be applied in field emission devices. The production method has advantages of simple process, no pollution, less demand on equipment, and it is easy to control, favorable for industrialized production, can be widely used in the field of producing luminescent material.

### BRIEF DESCRIPTION OF THE DRAWINGS

Further description of the present invention will be illustrated, which combined with embodiments in the drawings:

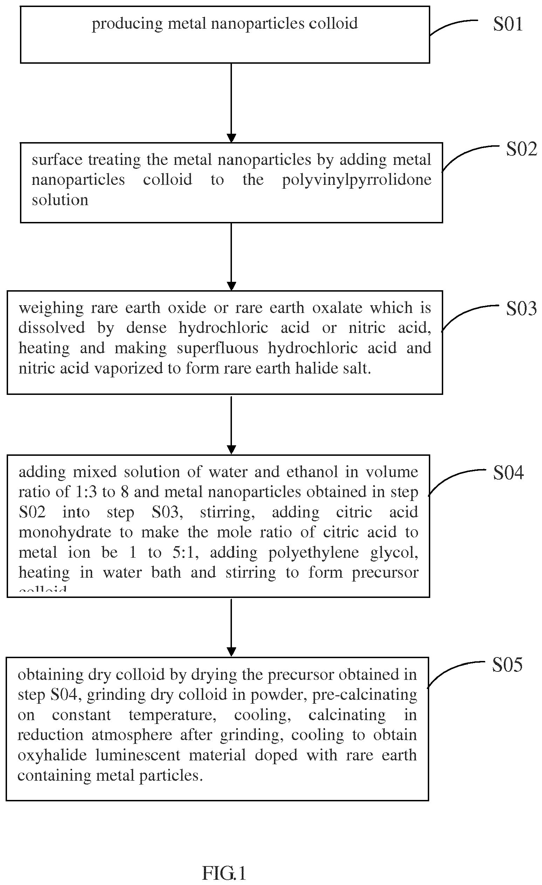

FIG. 1 is a flow chart of the production method of rare earth doped oxyhalide luminescent material containing metal particles of the present invention;

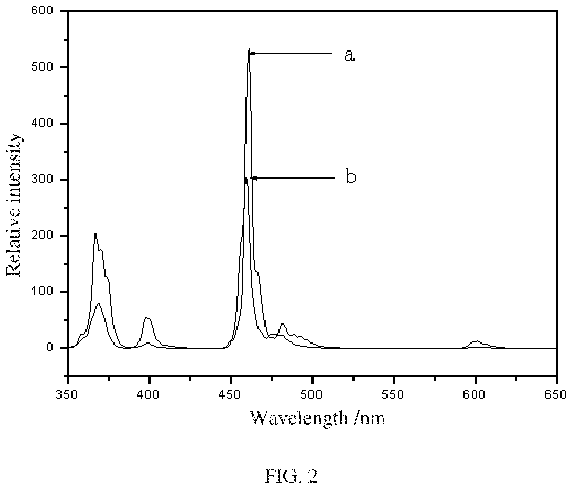

FIG. 2 is an emission spectrum of luminescent material excited by cathode ray under 3.0KV acceleration voltage in Example 9 of the present invention with respect to La_{0.995}Tm_{0.005}OCl. Herein, curve a is the emission spectrum of the luminescent material La_{0.995}Tm_{0.005}OCl: 1×10⁻⁴Ag; curve b is the emission spectrum of the luminescent material La_{0.995}Tm_{0.005}OCl without Ag nanoparticles;

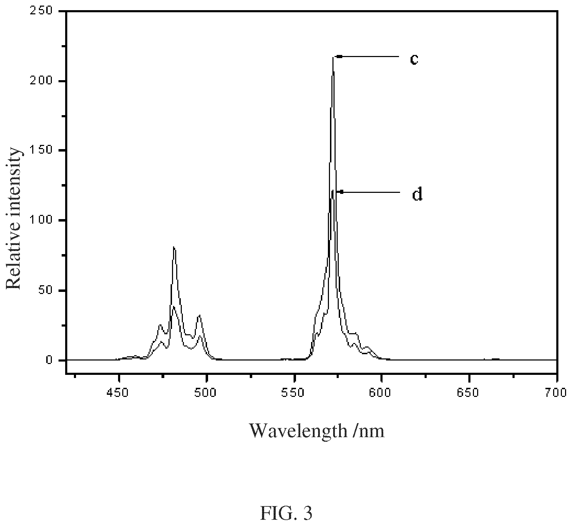

FIG. 3 is an emission spectrum of luminescent material excited by cathode ray under 3.0KV acceleration voltage in Example 10 of the present invention with respect to La_{0.98}Dy_{0.02}OCl. Herein, curve c is the emission spectrum of the luminescent material La_{0.98}Dy_{0.02}OCl: 5×10⁻⁵ Ag; curve d is the emission spectrum of the luminescent material La_{0.98}Dy_{0.02}OCl without Ag nanoparticles.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

The present invention provides a production method of an rare earth doped oxyhalide luminescent material containing metal particles, wherein said rare earth doped oxyhalide luminescent material containing metal particles has chemical formula of Re'₁₋ₓRe"ₓOX: yM, wherein Re' is the first rare earth element, Re" is the second rare earth element; X is F, Cl or Br, M is metal nanoparticles, x is in the range of 0.001 to 0.15, and y is in the range of 5×10⁻⁵ to 2×10⁻³.

In the luminescent material of the present invention, said first rare earth element Re' is Y, La or Sc, said second rare earth element Re" is Tm, Tb, Eu, Sm, Gd, Dy or Ce. Said metal nanoparticles M is Ag, Au, Pt or Pd metal nanoparticles.

Referring to FIG. 1, it will be understood that FIG. 1 shows the process of the production method of the present invention, the production method comprises:
S01: producing metal nanoparticles colloid;
S02: surface treating the metal nanoparticles by adding metal nanoparticles colloid to the polyvinylpyrrolidone solution;
S03: weighing rare earth oxide or rare earth oxalate and dissolving in dense nitric acid, heating and making superfluous nitric acid vaporized to form rare earth nitrate;
S04: adding mixed solution of water and ethanol in volume ratio of 1:3 to 8 and metal nanoparticles obtained in step 2 into step 3, stirring, adding citric acid monohydrate to make the mole ratio of citric acid to metal ion be 1 to 5:1, adding polyethylene glycol and superfluous ammonium halide successively, heating in water bath and stirring to form precursor colloid;
S05: obtaining dry colloid by drying the precursor obtained in step 4, grinding dry colloid in powder, pre-calcinating on constant temperature, cooling, calcinating in reduction atmosphere after grinding, cooling to obtain rare earth doped oxyhalide luminescent material containing metal particles.

In the production method of the present invention, in said S01, the method of producing metal nanoparticles colloid comprises: dissolving and diluting appropriate solution of metal salt in ethanol or water; under the conditions of magnetic stirring, successively adding assist agent and reducing agent, after the reaction, metal nanoparticles colloid is obtained. Said assist agent is polyvinylpyrrolidone, sodium citrate, cetyl trimethyl ammonium bromide, sodium dodecyl sulfate or sodium dodecyl sulfonate, said reducing agent is hydrazine hydrate, ascorbic acid, sodium citrate or sodium borohydride.

In the production method of the present invention, in said S04, the concentration of polyethylene glycol is in the range of 0.01 to 0.20g/ml, the heating in water bath is carried out in the temperature range of 75°C to 90°C, the time of stirring is in the range of 2 to 8h; adding ammonium halide in excess of 5% to 50% by mole ratio into obtained precursor colloid.

In the production method of the present invention, in said S03, rare earth oxide or rare earth oxalate can be dissolved in dense hydrochloric acid instead of dense nitric acid, heating and making superfluous dense hydrochloric acid vaporized to form rare earth chloride; accordingly, in S04, it is not necessary to add excessive ammonium chloride into obtained precursor colloid.

In said S05, said drying is carried out in blast drying oven and in the temperature range of 80°C to 120°C for 4 to 24h; pre-calcinating is carried out in the temperature range of 500°C to 800°C for 2 to 6h; calcinating is carried out in the temperature range of 800°C to 1000°C for 2 to 6h; said reduction atmosphere is selected from mixed gases of nitrogen and hydrogen, pure hydrogen, and carbonic oxide.

Compared with the prior art, by virtue of introduction of metal particles into the oxyhalide luminescent material doped with rare earth and the surface plasma resonance effect of the metal surface, the present invention improves the luminescence intensity of the oxyhalide luminescent material. The luminescent material of the present invention has good stability, uniform appearance, excellent luminescent performances, and, both the purity and luminance of the emitting light after excitation are high, so can be applied in field emission devices. The production method has advantages of simple process, no pollution, less demand on equipment, and it is easy to control, favorable for industrialized production, can be widely used in the field of producing luminescent material.

Special examples are disclosed as follows to demonstrate production method of rare earth doped oxyhalide luminescent material containing metal particles of the present invention and other properties.

### Example 1: production of Y_{0.999}Tm_{0.001}OCl: 1.5×10⁻⁴ Pt by using sol-gel method

The production of Pt nanoparticles, including the following steps: weighing and dissolving 5.18mg of chloroplatinic acid (H₂PtCl₆•6H₂O) in 17 mL of deionized water; after chloroplatinic acid dissolved completely, weighing and dissolving 8mg of sodium citrate and 12mg of sodium dodecyl sulfonate in the aqueous solution of chloroplatinic acid under the condition of magnetic stirring; weighing and dissolving 0.38mg of sodium borohydride in 10mL of deionized water obtaining 10mL of 1×10⁻³mol/L aqueous solution of sodium borohydride, preparing 10mL of 1×10⁻²mol/L hydrazine hydrate solution at the same time; under the condition of magnetic stirring, adding 0.4mL aqueous solution of sodium borohydride into the aqueous solution of chloroplatinic acid, stirring and reacting for 5min, and then adding 2.6mL of 1×10⁻²mol/L hydrazine hydrate solution into the aqueous solution of chloroplatinic acid, continue to react for 40min, then obtaining 20mL of Pt nanoparticle colloid containing 5×10⁻⁴mol/L of Pt; then adding 3.0mg of PVP into 3mL of obtained Pt nanoparticle colloid, magnetically stirring for 12h. The surface-treated Pt nanoparticles is obtained.

The production of Y_{0.999}Tm_{0.001}OCl: 1.5×10⁻⁴ Pt, including the following steps: placing 2.2558g of Y₂O₃ and 0.0039g of Tm₂O₃ into a beaker, dissolving in dense hydrochloric acid (HCl), heating to evaporate superfluous HCl, rare earth halide salt is obtained; adding certain amount of mixed solution of 10ml of water and 30ml of ethanol to dissolve, adding said treated metal nanoparticles colloid and stirring completely; adding 2.1014g of citric acid monohydrate, herein the mole ratio of citric acid to metal ion in raw material is 1:1, then adding 0.46g of polyethylene glycol (PEG, molecular weight is 10000), the concentration of polyethylene glycol is 0.01g/ml, stirring in a 75°C water bath for 8h to obtain uniform and transparent precursor colloid; drying the colloid in blast drying oven at 80°C for 24h to evaporate solvent obtaining dry colloid; grinding the obtained dry colloid in powder, pre-calcinating in box-type high-temperature furnace at the temperature maintained at 500°C for 6h, cooling, grinding to obtain precursor; then placing the precursor into box-type high-temperature furnace, calcinating in air atmosphere at 1000°C for 2h, naturally cooling. The desired luminescent material is obtained.

### Example 2: production of La_{0.995}Sm_{0.005}OCl: 1×10⁻⁴ Au by using sol-gel method

The production of Au nanoparticles, including the following steps: weighing and dissolving 4.12mg of chloroauric acid (AuCl₃•HCl•4H₂O) in 8.4 mL of deionized water; after chloroauric acid dissolved completely, weighing and dissolving 14mg of sodium citrate and 6mg of cetyl trimethyl ammonium bromide in the aqueous solution of chloroauric acid under the condition of magnetic stirring; weighing and dissolving 1.9mg of sodium borohydride and 17.6mg of ascorbic acid in 10mL of deionized water, respectively, obtaining 10mL of 5×10⁻³ mol/L aqueous solution of sodium borohydride and 10mL of 1×10⁻²mol/L aqueous solution of ascorbic acid; under the condition of magnetic stirring, adding 0.04mL aqueous solution of sodium borohydride into the aqueous solution of chloroauric acid, stirring and reacting for 5min, and then adding 1.56mL of 1×10⁻²mol/L aqueous solution of ascorbic acid into the aqueous solution of chloroauric acid, continue to react for 30min, then obtaining 10mL of Au nanoparticle colloid containing 5×10⁻³ mol/L of Au; adding 2mg of PVP, into 1mL of obtained Au nanoparticle colloid, and magnetically stirring for 8h. The surface-treated Au nanoparticle is obtained.

The production of La_{0.995}Sm_{0.005}OCl: 1×10⁻⁴ Au, including the following steps: placing 3.2418g of La₂O₃ and 0.0174g of Sm₂O₃ into a beaker, dissolving in dense nitric acid (HNO₃), heating to evaporate superfluous nitric acid, rare earth nitrate is obtained; adding certain amount of mixed solution of 10ml of water and 50ml of ethanol and said treated metal nanoparticles colloid, stirring completely; adding 8.5656g of citric acid monohydrate, to make the mole ratio of citric acid to metal ion in raw material be 4:1, then adding 6.6g of polyethylene glycol (PEG, molecular weight is 10000) and 0.2140g of ammonium chloride (NH₄Cl, in excess of 40%) successively, the concentration of polyethylene glycol is 0.1g/ml, stirring in a 85°C water bath for 4h to obtain uniform and transparent precursor colloid; drying the colloid in blast drying oven at 100°C for 8h to evaporate solvent obtaining dry colloid; grinding the obtained dry colloid in powder, pre-calcinating in box-type high-temperature furnace at the temperature maintained at 600°C for 4h, cooling, grinding to obtain precursor; then placing the precursor into tube furnace, calcinating in air atmosphere at 800°C for 4h, naturally cooling. The desired luminescent material is obtained.

### Example 3: production of La_{0.985}Tb_{0.01}Sm_{0.005}OCl: 4×10⁻⁴ Ag by using sol-gel method

The production of Ag nanoparticles, including the following steps: weighing and dissolving 3.40mg of silver nitrate (AgNO₃) in 18.4 mL of deionized water; after silver nitrate dissolved completely, weighing and dissolving 22mg of sodium citrate and 20mg of PVP in the aqueous solution of silver nitrate under the condition of magnetic stirring; weighing and dissolving 5.7mg of sodium borohydride in 10mL of deionized water obtaining 10ml of 1.5×10⁻²mol/L aqueous solution of sodium borohydride; under the condition of magnetic stirring, adding 1.6mL of 1.5×10⁻²mol/L aqueous solution of sodium borohydride into the aqueous solution of silver nitrate at once, continue to react for 10min, then obtaining 20mL of Ag nanoparticle colloid containing 1×10⁻³mol/L of Ag; adding 5mg of PVP into 4mL of obtained Ag nanoparticle colloid, and magnetically stirring for 6h. The surface-treated Ag nanoparticle is obtained.

The production of La_{0.985}Tb_{0.01}Sm_{0.005}OCl: 4×10⁻⁴Ag, including the following steps: placing 3.2092g of La₂O₃, 0.0374g of Tb₄O₇ and 0.0349g of Sm₂O₃ into a beaker, dissolving in dense hydrochloric acid (HCl), heating to evaporate superfluous HCl, rare earth halide salt is obtained; adding certain amount of mixed solution of 10ml of water and 50ml of ethanol in volume ratio of 1:5, and adding said treated metal nanoparticles colloid, stirring completely; adding 6.3042g of citric acid monohydrate, herein the mole ratio of citric acid to metal ion in raw material is 3:1, then adding 10.2g of polyethylene glycol (PEG, molecular weight is 10000), the concentration of polyethylene glycol is 0.15g/ml, stirring in a 80°C water bath for 2h to obtain uniform and transparent precursor colloid; drying the colloid in blast drying oven at 120°C for 4h to evaporate solvent obtaining dry colloid; grinding the obtained dry colloid in powder, pre-calcinating in box-type high-temperature furnace at the temperature maintained at 800°C for 3h, cooling, grinding to obtain precursor; then placing the precursor into box-type high-temperature furnace, calcinating in air atmosphere at 900°C for 4h, naturally cooling. The desired luminescent material is obtained.

### Example 4: production of La_{0.98}Eu_{0.02}OCl: 1×10⁻⁴ Pd by using sol-gel method

The production of Pd nanoparticles, including the following steps: weighing and dissolving 0.43mg of palladium chloride (PdCl₂•2H₂O) in 8.5 mL of deionized water; after palladium chloride dissolved completely, weighing and dissolving 11.0mg of sodium citrate and 4.0mg of sodium dodecyl sulfate in the aqueous solution of palladium chloride under the condition of magnetic stirring; weighing and dissolving 3.8mg of sodium borohydride in 10mL of deionized water obtaining 1×10⁻²mol/L reducing aqueous solution of sodium borohydride; under the condition of magnetic stirring, adding rapidly 0.48mL of 1×10⁻²mol/L aqueous solution of sodium borohydride into the aqueous solution of palladium chloride, continue to react for 20min, then obtaining 10mL of Pd nanoparticle colloid containing 1×10⁻⁴mol/L of Pd; adding 1mg of PVP into 4mL of obtained Pd nanoparticle colloid, and magnetically stirring for 4h. The surface-treated Pd nanoparticle is obtained.

The production of La_{0.98}Eu_{0.02}OCl: 1×10⁻⁴ Pd, including the following steps: placing 3.1929g of La₂O₃ and 0.0704g of Eu₂O₃ into a beaker, dissolving in dense hydrochloric acid (HCl), heating to evaporate superfluous HCl, rare earth halide salt is obtained; adding certain amount of mixed solution of 10ml of water and 60ml of ethanol in volume ratio of 1:6, and adding said treated metal nanoparticles colloid, stirring completely; adding 10.507g of citric acid monohydrate, herein the mole ratio of citric acid to metal ion in raw material is 5:1, then adding 16g of polyethylene glycol (PEG, molecular weight is 10000), the concentration of polyethylene glycol is 0.20g/ml, stirring in a 85°C water bath for 2h to obtain uniform and transparent precursor colloid; drying the colloid in blast drying oven at 100°C for 12h to evaporate solvent obtaining dry colloid; grinding the obtained dry colloid in powder, pre-calcinating in box-type high-temperature furnace at the temperature maintained at 500°C for 2h, cooling, grinding to obtain precursor; then placing the precursor into box-type high-temperature furnace, calcinating in air atmosphere at 800°C for 5h, naturally cooling. The desired luminescent material is obtained.

### Example 5: production of La_{0.98}Y_{0.015}Dy_{0.005}OCl: 4.25×10⁻⁴ Pt/Au by using sol-gel method

The production of Pd/Au nanoparticles, including the following steps: weighing and dissolving 10.7mg of chloroauric acid (AuCl₃•HCl•4H₂O) and 13.56mg of chloroplatinic acid (H₂PtCl₆•6H₂O) in 28mL of deionized water; after dissolved completely, weighing and dissolving 22mg of sodium citrate and 20mg of PVP in the mixed solution under the condition of magnetic stirring; weighing and dissolving 5.7mg of fresh-made sodium borohydride 10mL of deionized water, obtaining 10mL of 1.5×10⁻²mol/L aqueous solution of sodium borohydride; under the condition of magnetic stirring, adding 4mL of 1.5×10⁻²mol/L aqueous solution of sodium borohydride into the mixed solution at once, continue to react for 20min, then obtaining 30mL of Pt/Au nanoparticle colloid containing 1.7×10⁻³mol/L of total metal particle; adding 12mg of PVP into 2.5mL of Pt/Au nanoparticle colloid, and magnetically stirring for 6h. The surface-treated Pt/Au nanoparticle is obtained.

The production of La_{0.98}Y_{0.015}Dy_{0.005}OCl: 4.25×10⁻⁴Pt/Au, including the following steps: placing 3.1929g of La₂O₃, 0.0339g of Y₂O₃ and 0.0186g of Dy₂O₃ into a beaker, dissolving in dense hydrochloric acid (HCl), heating to evaporate superfluous HCl, rare earth halide salt is obtained; adding certain amount of mixed solution of 10ml of water and 80ml of ethanol in volume ratio of 1:8, and adding said treated metal nanoparticles colloid, stirring completely; adding 8.4056g of citric acid monohydrate, herein the mole ratio of citric acid to metal ion in raw material is 4:1, then adding 9.5g of polyethylene glycol (PEG, molecular weight is 10000), the concentration of polyethylene glycol is 0.10g/ml, stirring in a 80°C water bath for 6h to obtain uniform and transparent precursor colloid; drying the colloid in blast drying oven at 110°C for 12h to evaporate solvent obtaining dry colloid; grinding the obtained dry colloid in powder, pre-calcinating in box-type high-temperature furnace at the temperature maintained at 500°C for 5h, cooling, grinding to obtain precursor; then placing the precursor into box-type high-temperature furnace, calcinating in air atmosphere at 900°C for 3h, naturally cooling. The desired luminescent material is obtained.

### Example 6: production of La_{0.97}Sc_{0.026}Tb_{0.004}OF: 2×10⁻³ Ag by using sol-gel method

The production of Ag nanoparticles, including the following steps: weighing and dissolving 3.40mg of silver nitrate (AgNO₃) in 18.4 mL of deionized water; after silver nitrate dissolved completely, weighing and dissolving 22mg of sodium citrate and 20mg of PVP in the aqueous solution of silver nitrate under the condition of magnetic stirring; weighing and dissolving 5.7mg of sodium borohydride in 10mL of deionized water obtaining 10ml of 1.5×10⁻²mol/L aqueous solution of sodium borohydride; under the condition of magnetic stirring, adding 1.6mL of 1.5×10⁻²mol/L aqueous solution of sodium borohydride into the aqueous solution of silver nitrate at once, continue to react for 10min, then obtaining 20mL of Ag nanoparticle colloid containing 1×10⁻³mol/L of Ag; adding 40mg of PVP into 20mL of obtained Ag nanoparticle colloid, and magnetically stirring for 6h. The surface-treated Ag nanoparticle is obtained.

The production of La_{0.97}Sc_{0.026}Tb_{0.004}OF: 2×10⁻³ Ag, including the following steps: placing 3.1604g of La₂O₃, 0.0150g of Tb₄O₇ and 0.0359g of SC₂O₃ into a beaker, dissolving in dense nitric acid (HNO₃), heating to evaporate superfluous HNO₃, rare earth nitrate is obtained; adding certain amount of mixed solution of 10ml of water and 45ml of ethanol in volume ratio of 1:5, and adding said treated metal nanoparticles colloid, stirring completely; adding 6.3042g of citric acid monohydrate, to make the mole ratio of citric acid to metal ion in raw material be 3:1, then adding 6g of polyethylene glycol (PEG, molecular weight is 10000) and 0.7778g of NH₄F (in excess of 5 mole percent), the concentration of polyethylene glycol is 0.10g/ml, stirring in a 85°C water bath for 4h to obtain uniform and transparent precursor colloid; drying the colloid in blast drying oven at 110°C for 8h to evaporate solvent obtaining dry colloid; grinding the obtained dry colloid in powder, pre-calcinating in box-type high-temperature furnace at the temperature maintained at 600°C for 3h, cooling, grinding to obtain precursor; then placing the precursor into tube furnace, calcinating in reduction atmosphere (mixed gases of nitrogen and hydrogen in volume ratio of 95:5) at 900°C for 4h, naturally cooling. The desired luminescent material is obtained.

### Example 7: production of La_{0.97}Ce_{0.03}OBr: 2×10⁻⁴ Ag by using sol-gel method

The production of Ag nanoparticles, including the following steps: weighing and dissolving 3.40mg of silver nitrate (AgNO₃) in 18.4 mL of deionized water; after silver nitrate dissolved completely, weighing and dissolving 22mg of sodium citrate and 20mg of PVP in the aqueous solution of silver nitrate under the condition of magnetic stirring; weighing and dissolving 5.7mg of sodium borohydride in 10mL of deionized water obtaining 10ml of 1.5×10⁻²mol/L aqueous solution of sodium borohydride; under the condition of magnetic stirring, adding 1.6mL of 1.5×10⁻²mol/L aqueous solution of sodium borohydride into the aqueous solution of silver nitrate at once, continue to react for 10min, then obtaining 20mL of Ag nanoparticle colloid containing 1×10⁻³mol/L of Ag; adding 4mg of PVP into 2mL of obtained Ag nanoparticle colloid, and magnetically stirring for 6h. The surface-treated Ag nanoparticle is obtained.

The production of La_{0.97}Ce_{0.03}OBr: 2×10⁻⁴ Ag, including the following steps: placing 3.1604g of La₂O₃ and 0.1033g of CeO₂ into a beaker, dissolving in dense nitric acid (HNO₃), heating to evaporate superfluous HNO₃, rare earth nitrate is obtained; adding certain amount of mixed solution of 10ml of water and 46ml of ethanol in volume ratio of 1:5, and adding said treated metal nanoparticles colloid, stirring completely; adding 4.2028g of citric acid monohydrate, to make the mole ratio of citric acid to metal ion in raw material be 2:1, then adding 6g of polyethylene glycol (PEG, molecular weight is 10000) and 2.9383g of NH₄Br (in excess of 50 mole percent), the concentration of polyethylene glycol is 0.10g/ml, stirring in a 90°C water bath for 4h to obtain uniform and transparent precursor colloid; drying the colloid in blast drying oven at 110°C for 8h to evaporate solvent obtaining dry colloid; grinding the obtained dry colloid in powder, pre-calcinating in box-type high-temperature furnace at the temperature maintained at 500°C for 4h, cooling, grinding to obtain precursor; then placing the precursor into tube furnace, calcinating in reduction atmosphere (mixed gases of nitrogen and hydrogen in volume ratio of 90:10) at 800°C for 6h, naturally cooling. The desired luminescent material is obtained.

### Example 8: production of La_{0.85}Gd₀.₁Tb_{0.05}OF: 5×10⁻⁴ Au by using sol-gel method

The production of Au nanoparticles, including the following steps: weighing and dissolving 4.12mg of chloroauric acid (AuCl₃•HCl•4H₂O) in 8.4 mL of deionized water; after chloroauric acid dissolved completely, weighing and dissolving 14mg of sodium citrate and 6mg of cetyl trimethyl ammonium bromide in the aqueous solution of chloroauric acid under the condition of magnetic stirring; weighing and dissolving 1.9mg of sodium borohydride and 17.6mg of ascorbic acid in 10mL of deionized water, respectively, obtaining 10mL of 5×10⁻³ mol/L aqueous solution of sodium borohydride and 10mL of 1×10⁻²mol/L aqueous solution of ascorbic acid; under the condition of magnetic stirring, adding 0.04mL aqueous solution of sodium borohydride into the aqueous solution of chloroauric acid, stirring and reacting for 5min, and then adding 1.56mL of 1×10⁻²mol/L aqueous solution of ascorbic acid into the aqueous solution of chloroauric acid, continue to react for 30min, then obtaining 10mL of Au nanoparticle colloid containing 1×10⁻³mol/L of Au; adding 7.5mg of PVP into 5mL of obtained Au nanoparticle colloid, and magnetically stirring for 8h. The surface-treated Au nanoparticle is obtained.

The production of La_{0.85}Gd_{0.1}Tb_{0.05}OF: 5×10⁻⁴ Au, including the following steps: placing 2.7694g of La₂O₃, 0.3625g of Gd₂O₃ and 0.1869g of Tb₄O₇ into a beaker, dissolving in dense nitric acid (HNO₃), heating to evaporate superfluous HNO₃, rare earth nitrate is obtained; adding certain amount of mixed solution of 10ml of water and 50ml of ethanol in volume ratio of 1:5, and adding said treated metal nanoparticles colloid, stirring completely; adding 8.5656g of citric acid monohydrate, to make the mole ratio of citric acid to metal ion in raw material be 4:1, then adding 6.6g of polyethylene glycol (PEG, molecular weight is 10000) and 0.9630g of NH₄F (in excess of 30 mole percent), the concentration of polyethylene glycol is 0.1g/ml, stirring in a 85°C water bath for 4h to obtain uniform and transparent precursor colloid; drying the colloid in blast drying oven at 100°C for 8h to evaporate solvent obtaining dry colloid; grinding the obtained dry colloid in powder, pre-calcinating in box-type high-temperature furnace at the temperature maintained at 600°C for 4h, cooling, grinding to obtain precursor; then placing the precursor into tube furnace, calcinating in reduction atmosphere (CO) at 900°C for 4h, naturally cooling. The desired luminescent material is obtained.

### Example 9: production of La_{0.995}Tm_{0.005}OCl: 1×10⁻⁴ Ag by using sol-gel method

The production of Ag nanoparticles, including the following steps: weighing and dissolving 3.40mg of silver nitrate (AgNO₃) in 18.4 mL of deionized water; after silver nitrate dissolved completely, weighing and dissolving 22mg of sodium citrate and 20mg of PVP in the aqueous solution of silver nitrate under the condition of magnetic stirring; weighing and dissolving 5.7mg of sodium borohydride in 10mL of deionized water obtaining 10ml of 1.5×10⁻²mol/L aqueous solution of sodium borohydride; under the condition of magnetic stirring, adding 1.6mL of 1.5×10⁻²mol/L aqueous solution of sodium borohydride into the aqueous solution of silver nitrate at once, continue to react for 10min, then obtaining 20mL of Ag nanoparticle colloid containing 1×10⁻³mol/L of Ag; adding 2mg of PVP into 0.5mL of obtained Ag nanoparticle colloid, and magnetically stirring for 24h. The surface-treated Ag nanoparticle is obtained.

The production of La_{0.995}Tm_{0.005}OCl: 1×10⁻⁴ Ag, including the following steps: placing 1.6209g of La₂O₃ and 0.0096g of Tm₂O₃ into a beaker, dissolving in dense hydrochloric acid (HCl), heating to evaporate superfluous HCl, rare earth halide salt is obtained; adding certain amount of mixed solution of 8ml of water and 32ml of ethanol in volume ratio of 1:5, and adding said treated metal nanoparticles colloid, stirring completely; adding 2.1014g of citric acid monohydrate, herein the mole ratio of citric acid to metal ion in raw material is 2:1, then adding 4g of polyethylene glycol (PEG, molecular weight is 10000), the concentration of polyethylene glycol is 0.10g/ml, stirring in a 80°C water bath for 6h to obtain uniform and transparent precursor colloid; drying the colloid in blast drying oven at 110°C for 12h to evaporate solvent obtaining dry colloid; grinding the obtained dry colloid in powder, pre-calcinating in box-type high-temperature furnace at the temperature maintained at 500°C for 5h, cooling, grinding to obtain precursor; then placing the precursor into box-type high-temperature furnace, calcinating in air atmosphere at 800°C for 4h, naturally cooling. The desired luminescent material La_{0.995}Tm_{0.005}OCl: 1×10⁻⁴ Ag is obtained. The no metal nano particle coating luminescent material La_{0.995}Tm_{0.005}OCl is prepared using the same method.

FIG. 2 is an emission spectrum of luminescent material La_{0.995}Tm_{0.005}OCl: 1×10⁻⁴ Ag (curve a) excited by cathode ray under 3.0KV acceleration voltage in the Example 9 of the present invention with respect to La_{0.995}Tm_{0.005}OCl (curve b). It can be seen from the emission peak at 461nm, that the luminous intensity of metal nano particle-coating fluorescent powder is increased by 78%, compared to the no metal nano particle coating fluorescent powder.

### Example 10: production of La_{0.98}Dy_{0.02}OCl: 5×10⁻⁵ Ag by using sol-gel method

The production of Ag nanoparticles, including the following steps: weighing and dissolving 3.40mg of silver nitrate (AgNO₃) in 18.4 mL of deionized water; after silver nitrate dissolved completely, weighing and dissolving 22mg of sodium citrate and 20mg of PVP in the aqueous solution of silver nitrate under the condition of magnetic stirring; weighing and dissolving 5.7mg of sodium borohydride in 10mL of deionized water obtaining 10ml of 1.5×10⁻²mol/L aqueous solution of sodium borohydride; under the condition of magnetic stirring, adding 1.6mL of 1.5×10⁻²mol/L aqueous solution of sodium borohydride into the aqueous solution of silver nitrate at once, continue to react for 10min, then obtaining 20mL of Ag nanoparticle colloid containing 1×10⁻³mol/L of Ag; adding 1mg of PVP into 0.25mL of obtained Ag nanoparticle colloid, and magnetically stirring for 12h. The surface-treated Ag nanoparticle is obtained.

The production of La_{0.98}Dy_{0.02}OCl: 5×10⁻⁵ Ag, including the following steps: placing 1.5965g of La₂O₃ and 0.0373g of Dy₂O₃ into a beaker, dissolving in dense hydrochloric acid (HCl), heating to evaporate superfluous HCl, rare earth halide salt is obtained; adding certain amount of mixed solution of 8ml of water and 32ml of ethanol in volume ratio of 1:5, and adding said treated metal nanoparticles colloid, stirring completely; adding 4.2028g of citric acid monohydrate, herein the mole ratio of citric acid to metal ion in raw material is 4:1, then adding 4g of polyethylene glycol (PEG, molecular weight is 10000), the concentration of polyethylene glycol is 0.10g/ml, stirring in a 80°C water bath for 6h to obtain uniform and transparent precursor colloid; drying the colloid in blast drying oven at 100°C for 12h to evaporate solvent obtaining dry colloid; grinding the obtained dry colloid in powder, pre-calcinating in box-type high-temperature furnace at the temperature maintained at 500°C for 5h, cooling, grinding to obtain precursor; then placing the precursor into box-type high-temperature furnace, calcinating in air atmosphere at 800°C for 4h, naturally cooling. The desired luminescent material La_{0.98}Dy_{0.02}OCl: 5×10⁻⁵ Ag is obtained. The no metal nano particle coating luminescent material La_{0.98}Dy_{0.02}OCl is prepared using the same method.

FIG. 3 is an emission spectrum of luminescent material La_{0.98}Dy_{0.02}OCl: 5×10⁻⁵ Ag (curve c) excited by cathode ray under 3.0KV acceleration voltage in the present embodiment with respect to La_{0.98}Dy_{0.02}OCl (curve d). It can be seen from the emission peak at 572nm, that the luminous intensity of metal nano particle-coating fluorescent powder is increased by 79%, compared to the no metal nano particle coating fluorescent powder.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Accordingly, the scope of the present invention is described by the appended claims and is supported by the foregoing description.

## Claims

1. A production method of rare earth doped oxyhalide luminescent material containing metal particles, including the following steps:
step 1: producing metal nanoparticles colloid;
step 2: surface treating the metal nanoparticles by adding metal nanoparticles colloid to the polyvinylpyrrolidone solution;
step 3: weighing rare earth oxide or rare earth oxalate and dissolving in dense nitric acid, heating and making superfluous nitric acid vaporized to form rare earth nitrate;
step 4: adding mixed solution of water and ethanol in volume ratio of 1:3 to 8 and metal nanoparticles obtained in step 2 into step 3, stirring, adding citric acid monohydrate to make the mole ratio of citric acid to metal ion be 1 to 5:1, adding polyethylene glycol and superfluous ammonium halide successively, heating in water bath and stirring to form precursor colloid;
step 5: obtaining dry colloid by drying the precursor in step 4, grinding dry colloid in powder, pre-calcinating on constant temperature, cooling, calcinating in the air or reduction atmosphere after grinding, cooling to obtain rare earth doped oxyhalide luminescent material containing metal particles.

2. Production method of rare earth doped oxyhalide luminescent material containing metal particles as in claim 1, wherein in said step 1, the method of producing metal nanoparticles colloid comprises: dissolving and diluting appropriate solution of metal salt in ethanol or water, under the conditions of magnetic stirring, successively adding assist agent and reducing agent which act the role as stabilizer and dispersant respectively, after the reaction, metal nanoparticles colloid is obtained.

3. Production method as in claim 2, wherein said assist agent is polyvinylpyrrolidone, sodium citrate, cetyl trimethyl ammonium bromide, sodium dodecyl sulfate or sodium dodecyl sulfonate, said reducing agent is hydrazine hydrate, ascorbic acid, sodium citrate or sodium borohydride.

4. Production method as in claim 1, wherein in said step 4, the concentration of said polyethylene glycol is in the range of 0.01 to 0.20g/ml, the heating in water bath is carried out in the temperature range of 75°C to 90°C, the time of stirring is in the range of 2 to 8h.

5. Production method as in claim 1, wherein when the halogen in oxyhalide luminescent material is chlorine, in said step 3, rare earth oxide or rare earth oxalate is dissolved in dense hydrochloric acid instead of dense nitric acid, heating and making superfluous nitric acid vaporized to form rare earth chloride.

6. Production method as in claim 1, wherein in said step 4, ammonium halide is in excess of 5% to 50% by mole ratio.

7. Production method as in claim 1, wherein in said step 5, said drying is carried out in the temperature range of 80°C to 120°C for 4 to 24h.

8. Production method as in claim 1, wherein in said step 5, pre-calcinating is carried out in the temperature range of 500°C to 800°C for 2 to 6h.

9. Production method as in claim 1, wherein in said step 5, calcinating is carried out in the temperature range of 800°C to 1000°C for 2 to 6h.

10. Production method as in claim 1, wherein in said step 5, said reduction atmosphere is selected from mixed gases of nitrogen and hydrogen, pure hydrogen, reduction atmosphere formed in carbonic oxide.

## Patentansprüche

1. Herstellungsverfahren für Metallteilchen enthaltendes, lumineszierendes, Seltenerd-dotiertes Oxyhalogenid-Material, das die folgenden Schritte umfasst:
Schritt 1: Herstellung eines Metallnanoteilchen-Kolloids;
Schritt 2: Oberflächenbehandlung der Metallnanoteilchen durch Zusetzen des Metallnanoteilchen-Kolloids zu einer Polyvinylpyrrolidon-Lösung;
Schritt 3: Einwiegen eines Seltenerdoxids oder Seltenerdoxalats und Lösen desselben in konzentrierter Salpetersäure, Erhitzen und Abdampfen von überschüssiger Salpetersäure, um ein Seltenerdnitrat herzustellen;
Schritt 4: Zusetzen einer gemischten Lösung aus Wasser und Ethanol in einem Volumenverhältnis von 1:3 bis 8 und von den in Schritt 2 erhaltenen Metallnanoteilchen zu Schritt 3, Rühren, Zusetzen von Citronensäuremonohydrat in einem Molverhältnis zwischen Citronensäure und Metallionen von 1 bis 5:1, aufeinanderfolgendes Zusetzen von Polyethylenglykol und einem Überschuss an Ammoniumhalogenid, Erhitzen in einem Wasserbad und Rühren, um ein Vorläufer-Kolloid zu bilden;
Schritt 5: Erhalten eines trockenen Kolloids durch Trocknen des Vorläufers aus Schritt 4, Mahlen des trockenen Kolloids zu Pulver, Vorkalzinieren bei konstanter Temperatur, Kalzinieren in Luft oder einer reduzierenden Atmosphäre nach dem Mahlen, Abkühlen, um das Metallteilchen enthaltende, lumineszierende, Seltenerddotierte Oxyhalogenid-Material zu erhalten.

2. Herstellungsverfahren für Metallteilchen enthaltendes, lumineszierendes, Seltenerd-dotiertes Oxyhalogenid-Material nach Anspruch 1, wobei das Verfahren zur Herstellung des Metallnanoteilchen-Kolloids in Schritt 1 Folgendes umfasst: Lösen und Verdünnen einer geeigneten Lösung eines Metallsalzes in Ethanol oder Wasser unter den Bedingungen von magnetischem Rühren, aufeinanderfolgendes Zusetzen eines Hilfsmittels und eines Reduktionsmittels, die als Stabilisator bzw. Dispergiermittel dienen, wobei nach der Reaktion das Metallnanoteilchen-Kolloid erhalten wird.

3. Herstellungsverfahren nach Anspruch 2, wobei das Hilfsmittel Polyvinylpyrrolidon, Natriumcitrat, Cetyltrimethylammoniumbromid, Natriumdodecylsulfat oder Natriumdodecylsulfonat ist, wobei das Reduktionsmittel Hydrazinhydrat, Ascorbinsäure, Natriumcitrat oder Natriumborhydrid ist.

4. Herstellungsverfahren nach Anspruch 1, wobei die Konzentration des Polyethylenglykols in Schritt 4 im Bereich von 0,01 bis 0,20 g/ml liegt, das Erhitzen im Wasserbad bei einer Temperatur im Bereich von 75 °C bis 90 °C durchgeführt wird und die Rührdauer im Bereich von 2 bis 8 h liegt.

5. Herstellungsverfahren nach Anspruch 1, wobei, wenn das Halogen in dem lumineszierenden Oxyhalogenid-Material Chlor ist, das Seltenerdoxid oder Seltenerdoxalat in Schritt 3 in konzentrierter Salzsäure anstelle von konzentrierter Salpetersäure gelöst und erhitzt wird und überschüssige Salzsäure abgedampft wird, um ein Seltenerdchlorid zu erhalten.

6. Herstellungsverfahren nach Anspruch 1, wobei in Schritt 4 das Ammoniumhalogenid in einem Überschuss von 5 % bis 50 %, bezogen auf das Molverhältnis, vorliegt.

7. Herstellungsverfahren nach Anspruch 1, wobei in Schritt 5 das Trocknen 4 bis 24 h lang bei einer Temperatur im Bereich von 80 °C bis 120 °C durchgeführt wird.

8. Herstellungsverfahren nach Anspruch 1, wobei in Schritt 5 das Vorkalzinieren 2 bis 6 h lang bei einer Temperatur im Bereich von 500 °C bis 800 °C durchgeführt wird.

9. Herstellungsverfahren nach Anspruch 1, wobei in Schritt 5 das Kalzinieren 2 bis 6 h lang bei einer Temperatur im Bereich von 800 °C bis 1000 °C durchgeführt wird.

10. Herstellungsverfahren nach Anspruch 1, wobei in Schritt 5 die reduzierende Atmosphäre aus Gasgemischen aus Stickstoff und Wasserstoff, reinem Wasserstoff und einer in Kohlenstoffmonoxid gebildeten reduzierenden Atmosphäre ausgewählt ist.

## Revendications

1. Procédé de production d'un matériau luminescent d'oxyhalogénure à dopage de terre rare contenant des particules métalliques, comprenant les étapes suivantes consistant à :
étape 1 : produire des nanoparticules métalliques colloïdales ;
étape 2 : traiter en surface les nanoparticules métalliques en ajoutant des nanoparticules métalliques colloïdales à la solution de polyvinylpyrrolidone ;
étape 3 : peser de l'oxyde de terre rare ou de l'oxalate de terre rare et dissoudre dans de l'acide nitrique dense, chauffer et produire de l'acide nitrique superflu vaporisé pour former du nitrate de terre rare ;
étape 4 : ajouter une solution mixte d'eau et d'éthanol dans un rapport volumique de 1:3 à 8 et des nanoparticules métalliques obtenues de l'étape 2 à l'étape 3, agiter, ajouter de l'acide citrique monohydraté pour produire un rapport molaire de l'acide citrique à l'ion métallique 1 à 5:1, ajouter successivement du polyéthylène glycol et de l'halogénure d'ammonium superflu, chauffer au bain-marie et agiter pour former un colloïde précurseur ;
étape 5 : obtenir un colloïde sec en séchant le précurseur à l'étape 4, broyer du colloïde sec en poudre, pré-calciner à température constante, refroidir, calciner dans l'air ou dans une atmosphère de réduction après broyage, refroidir pour obtenir un matériau luminescent oxyhalogénure à dopage de terre rare contenant des particules métalliques.

2. Procédé de production d'un matériau luminescent d'oxyhalogénure à dopage de terre rare contenant des particules métalliques selon la revendication 1, dans lequel, dans ladite étape 1, le procédé de production de nanoparticules métalliques colloïdales comprend : la dissolution et la dilution d'une solution appropriée de sel de métal dans de l'éthanol ou de l'eau, dans les conditions d'agitation magnétique, l'ajout successivement d'un agent d'assistance et d'un agent réducteur qui jouent respectivement le rôle de stabilisant et de dispersant, et après la réaction, un colloïde de nanoparticules métalliques est obtenu.

3. Procédé de production selon la revendication 2, dans lequel ledit agent auxiliaire est la polyvinylpyrrolidone, le citrate de sodium, le bromure de cétyltriméthylammonium, le dodécylsulfate de sodium ou le dodécylsulfonate de sodium, ledit agent réducteur est l'hydrate d'hydrazine, l'acide ascorbique, le citrate de sodium ou le borohydrure de sodium.

4. Procédé de fabrication selon la revendication 1, dans lequel, dans ladite étape 4, la concentration dudit polyéthylèneglycol est comprise dans la plage de 0,01 à 0,20 g/ml, le chauffage dans un bain d'eau est effectué dans la plage de températures de 75°C à 90°C, et le temps d'agitation est dans la plage de 2 à 8h.

5. Procédé de fabrication selon la revendication 1, dans lequel, lorsque l'halogène dans le matériau luminescent d'oxyhalogénure est le chlore, à ladite étape 3, de l'oxyde de terre rare ou l'oxalate de terre rare est dissous dans de l'acide chlorhydrique dense à la place de l'acide nitrique dense, en chauffant et en produisant de l'acide nitrique superflu vaporisé pour former du chlorure de terre rare.

6. Procédé de production selon la revendication 1, dans lequel, dans ladite étape 4, l'halogénure d'ammonium a un rapport molaire de plus de 5 % à 50 %.

7. Procédé de production selon la revendication 1, dans lequel, dans ladite étape 5, ledit séchage est effectué dans la plage de températures de 80°C à 120°C pendant 4 à 24 heures.

8. Procédé de production selon la revendication 1, dans lequel, dans ladite étape 5, une pré-calcination est effectuée dans la plage de températures de 500°C à 800°C pendant 2 à 6 heures.

9. Procédé de fabrication selon la revendication 1, dans lequel, dans ladite étape 5, une calcination est effectuée dans la plage de températures de 800°C à 1000°C pendant 2 à 6 heures.

10. Procédé de production selon la revendication 1, dans lequel, dans ladite étape 5, ladite atmosphère de réduction est choisie parmi des gaz mixtes d'azote et d'hydrogène, de l'hydrogène pur, une atmosphère de réduction formée dans de l'oxyde carbonique.
